# NEUE EUROPÄISCHE PATENTSCHRIFT

(11) **EP 3 111 102 B2**
(45) Veröffentlichungstag und Bekanntmachung des Hinweises auf die Entscheidung über den Einspruch: **01.12.2021**
(45) Hinweis auf die Patenterteilung: 06.06.2018
(21) Anmeldenummer: 15708433.6
(22) Anmeldetag: 30.01.2015
(51) Int. Cl.: F16D 13/70

(54) **KUPPLUNGSVORRICHTUNG**
COUPLING DEVICE
DISPOSITIF D'EMBRAYAGE

(30) Priorität: 26.02.2014 DE 102014203452
(43) Veröffentlichungstag der Anmeldung: 04.01.2017
(60) Teilanmeldung: 17160973.8
(73) Patentinhaber: Schaeffler Technologies AG & Co. KG, 91074 Herzogenaurach (DE)
(72) Erfinder: BULUT, Faruk, 77933 Lahr (DE)
(86) Internationale Anmeldenummer: PCT/DE2015/200047
(87) Internationale Veröffentlichungsnummer: WO 2015/127929

(56) Entgegenhaltungen:
- EP-B1- 1 384 910
- EP-B1- 1 923 599
- DE-A1- 10 155 146
- DE-A1- 10 155 146
- DE-A1- 10 234 834
- DE-A1-102010 047 447
- DE-A1-102010 047 447
- DE-A1-102011 079 840
- DE-A1-102011 079 840
- DE-A1-102013 218 857
- DE-A1-102014 203 452
- FR-A1- 2 707 714
- JP-A- 2005 273 788
- JP-U- H0 290 424
- US-A- 2 217 078
- US-A- 2 902 130
- US-A- 4 020 937
- US-A- 4 114 741
- GB translation of JP H0290424 U
- GB translation of JP 2005-273788 A

## Beschreibung

Die vorliegende Erfindung betrifft eine Kupplungsvorrichtung gemäß dem Oberbegriff des Patentanspruchs 1, insbesondere eine trockene Kupplungsvorrichtung für einen Antriebsstrang eines Kraftfahrzeugs.

Aus der DE 10 2009 035 225 A1 ist eine Kupplungsvorrichtung für einen Antriebsstrang eines Kraftfahrzeugs mit einer mit einer Abtriebsseite eines Verbrennungsmotors verbindbaren Gegendruckplatte und mit einer bezüglich der Gegendruckplatte in axialer Richtung der Kupplungsvorrichtung begrenzt verlagerbaren Anpressplatte zur reibschlüssigen Klemmung einer Kupplungsscheibe zwischen der Gegendruckplatte und der Anpressplatte bekannt. Die Anpressplatte ist als Gussbauteil ausgebildet.

Aus der DE 10 2011 079 840 A1 ist eine Kupplungsvorrichtung für einen Antriebsstrang eines Kraftfahrzeugs mit zumindest einer mit einer Abtriebsseite eines Verbrennungsmotors verbindbaren Gegendruckplatte und mit zumindest einer bezüglich der Gegendruckplatte in axialer Richtung der Kupplungsvorrichtung begrenzt verlagerbaren Anpressplatte zur reibschlüssigen Klemmung einer Kupplungsscheibe zwischen der Gegendruckplatte und der Anpressplatte bekannt, wobei zumindest eine der beiden Platten zumindest eine ringförmige, umgeformte Blechplatte aufweist.

Aus der JP 02090424 U1 ist eine Kupplungsvorrichtung bekannt, die auf den Oberbegriff des Patentanspruchs 1 lesbar ist.

Es ist Aufgabe der vorliegenden Erfindung, eine Kupplungsvorrichtung anzugeben, die kostengünstig in großen Stückzahlen hergestellt werden kann.

Erfindungsgemäß gelöst wird diese Aufgabe durch eine Kupplungsvorrichtung für einen Antriebsstrang eines Kraftfahrzeugs gemäß Patentanspruch 1. Insbesondere ist die Herstellung von Werkstücken aus ausgestanzten und umgeformten Blechbauteilen üblicherweise günstiger als die Herstellung von vergleichbaren Werkstücken aus Metallguss.

Insbesondere handelt es sich bei der Kupplungsvorrichtung um eine trockene Kupplungsvorrichtung für einen Antriebsstrang eines Kraftfahrzeugs.

Bevorzugte Ausführungsbeispiele der vorliegenden Erfindung sind in den abhängigen Ansprüchen dargelegt.

Die Anpressplatte ist drehfest in einem Kupplungsdeckel angeordnet und bezüglich der Gegendruckplatte in axialer Richtung begrenzt verlagerbar, während die Gegendruckplatte fest mit dem Kupplungsdeckel verbunden ist. Wenn die Kupplungsscheibe im eingerückten Zustand der Kupplungsvorrichtung zwischen der Anpressplatte und der Gegendruckplatte verspannt ist, erfolgt eine reibschlüssige Übertragung des Drehmoments von der Eingangsseite der Kupplungsvorrichtung, d.h. von der Abtriebsseite des Verbrennungsmotors bzw. einem zwischengeschalteten Drehschwingungsdämpfer, beispielsweise einem Zweimassenschwungrad, über die Gegendruckplatte und die Anpressplatte auf die Kupplungsscheibe, und von der Kupplungsscheibe auf die Ausgangsseite der Kupplungsvorrichtung, beispielsweise auf die Eingangswelle eines Getriebes.

Die Kupplungsvorrichtung weist ferner zumindest ein Hebelelement auf, auf das eine Aktoreinrichtung wirkt, durch die die Kupplungsvorrichtung eingerückt bzw. ausgerückt werden kann. Bei dem Hebelelement kann es sich um eine Tellerfeder, wie sie üblicherweise bei normal-eingerückten Kupplungsvorrichtungen zum Einsatz kommt, oder um eine Hebelfeder, wie sie üblicherweise bei normal-ausgerückten Kupplungsvorrichtungen zum Einsatz kommt, handeln.

Wenn die Kupplungsvorrichtung als normal-eingerückte Kupplungsvorrichtung ausgebildet ist, überwiegt die Kraft der einrückenden Tellerfeder, die auf die Anpressplatte wirkt, im betätigungsfreien Zustand die Kraft von ausrückenden Blattfedern, die auf die Anpressplatte wirken. Bei der Betätigung wird die Tellerfeder durch die Aktoreinrichtung mit einer Kraft beaufschlagt, durch die die Kupplung ausgerückt wird. Andererseits kann die Kupplungsvorrichtung aber auch als normal-ausgerückte Kupplungsvorrichtung ausgebildet sein, d.h. als Kupplung, bei der die Kraft der ausrückenden Blattfedern, die auf die Anpressplatte wirken, im betätigungsfreien Zustand die Kraft der Hebelfeder, die auf die Anpressplatte wirkt, überwiegt. Bei der Betätigung wird die Hebelfeder durch die Aktoreinrichtung mit einer Kraft beaufschlagt, durch die die Kupplung eingerückt wird.

Die Kupplungsvorrichtung kann gleichermaßen als gedrückte Kupplungsvorrichtung, d.h. als Kupplungsvorrichtung, bei der die Aktoreinrichtung eine drückende Kraft auf die Tellerfeder bzw. die Hebelfeder ausübt oder als gezogene Kupplungsvorrichtung, d.h. als Kupplungsvorrichtung, bei der die Aktoreinrichtung eine ziehende Kraft auf die Tellerfeder bzw. die Hebelfeder ausübt, ausgebildet sein. Ferner kann die Kupplungsvorrichtung einerseits als Trockenkupplung und andererseits als Nasskupplung ausgebildet sein.

Darüber hinaus kann die Kupplungsvorrichtung als Einfachkupplung ausgebildet sein, d.h. eine einzige Drehmomentübertragungseinrichtung mit einer Anpressplatte, einer Gegendruckplatte und einer dazwischen klemmbaren Kupplungsscheibe aufweisen, kann jedoch auch als Mehrfachkupplung, insbesondere als Doppelkupplung, ausgebildet sein. Die Doppelkupplung kann zwei separate Drehmomentübertragungseinrichtungen aufweisen, kann jedoch auch zwei Drehmomentübertragungseinrichtungen aufweisen, die sich eine gemeinsame Gegendruckplatte, die in diesem Zusammenhang auch als Zentralplatte bezeichnet wird, teilen.

Vorzugsweise weist eine Öffnung des U-förmigen Querschnitts in axialer Richtung von der Kupplungsscheibe weg. Hierdurch ist es möglich, dass die ringförmige, umgeformte Blechplatte zum einen durch die Schenkel des U-förmigen Querschnitts auf der der Kupplungsscheibe abgewandten Seite der Blechplatte, d.h. auf der Rückseite der Blechplatte, versteift wird, während die Öffnung zum anderen auch für eine gute Abführung der Reibungswärme auf der Rückseite der Blechplatte während des Betriebs der Kupplungsvorrichtung sorgt.

Der U-förmige Querschnitt weist einen ersten Schenkel, der sich in radialer Richtung der Kupplungsvorrichtung von einem Innenrand der Blechplatte ausgehend im Wesentlichen in axialer Richtung erstreckt, einen zweiten Schenkel, der sich in radialer Richtung von einem Außenrand der Blechplatte ausgehend im Wesentlichen in axialer Richtung erstreckt, und eine die beiden Schenkel verbindende Basis auf.

Weiterhin vorzugsweise ist einer der beiden Schenkel, vorzugsweise der erste Schenkel, in axialer Richtung kürzer als der andere der beiden Schenkel ausgebildet. Vorzugsweise liegt bei der als Anpressplatte ausgebildeten Platte ein Hebelelement, vorzugsweise eine Tellerfeder, zum Ein- und/oder Ausrücken verkippbar auf einer freien Kante des anderen der beiden Schenkel an.

Weiterhin ist es von Vorteil, wenn einer der beiden Schenkel, vorzugsweise der zweite Schenkel, mit der Basis einen Winkel α kleiner als 90° einschließt, wobei der Winkel α vorzugsweise 60° < α < 90°, insbesondere vorzugsweise 70° < α < 80°, ist.

Die Blechplatte ist vorzugsweise als Stahlanpressplatte ausgebildet. Die Blechplatte kann zumindest teilweise oder vollständig gehärtet sein und/oder zumindest teilweise oder vollständig mit einer Oberflächenbeschichtung versehen sein. Als Oberflächenbeschichtungen kommen beispielsweise Titannitrid, Wolframcarbid oder Diamond-Like-Carbon zum Einsatz. Beispielsweise ist es von Vorteil, wenn die Reibfläche der Blechplatte, d.h. die mit der Kupplungsscheibe in Anlage bringbare Oberfläche der Blechplatte, gehärtet ist, während die freie Kante des Schenkels, an dem das Hebelelement zum Ein- und/oder Ausrücken verkippbar anliegt, eine reibungsmindernde Oberflächenbeschichtung, beispielsweise aus Titannitrid, aufweist.

Gemäß einem weiteren bevorzugten Ausführungsbeispiel ist einer der beiden Schenkel, vorzugsweise der erste Schenkel, in Umfangsrichtung der Kupplungsvorrichtung als geschlossener Ring ausgebildet. Alternativ oder zusätzlich weist der andere der beiden Schenkel, vorzugsweise der zweite Schenkel, mehrere in Umfangsrichtung voneinander beabstandete Kreisbogensegmente auf.

Vorzugsweise ist zwischen zwei benachbarten Kreisbogensegmenten eine sich in radialer Richtung, vorzugsweise nach außen, erstreckende Lasche, über die die Anpressplatte mittels zumindest einer Blattfeder drehfest und in axialer Richtung begrenzt verlagerbar an einem Kupplungsdeckel oder an der Gegendruckplatte befestigt ist, ausgebildet.

In axialer Richtung zwischen der Blechplatte und der Kupplungsscheibe ist eine Zusatzplatte vorgesehen, die fest mit der Blechplatte verbunden ist, und die eine Reibfläche zur Anlage an der Kupplungsscheibe aufweist. Hierdurch ist es möglich, dass die Kupplungsvorrichtung auch größere Drehmomente übertragen kann bzw. die dabei entstehende Wärme besser zwischenspeichern und abführen kann.

Im Falle des U-förmigen Querschnitts der Blechplatte ist es von Vorteil, wenn Innen- und Außendurchmesser der Zusatzplatte im Wesentlichen dem Innen- und Außendurchmesser der Blechplatte entsprechen.

Gemäß einem weiteren bevorzugten Ausführungsbeispiel ist die Zusatzplatte als, vorzugsweise nicht umgeformte, weitere Blechplatte ausgebildet. Bei der weiteren Blechplatte handelt es sich vorzugsweise um ein Grobblech mit einer Stärke von 5, 6, 7, 8, 9 oder 10 mm. Genau wie die Blechplatte kann auch die Zusatzplatte eine teilweise oder vollständige Härtung und/oder eine teilweise oder vollständige Oberflächenbeschichtung aufweisen.

Vorzugsweise ist die Zusatzplatte mit der Blechplatte kraftschlüssig und/oder formschlüssig verbunden. Vorzugsweise ist die Zusatzplatte mit der Blechplatte vernietet, kann aber beispielsweise auch verschraubt sein.

Die vorliegende Erfindung wird nachfolgend anhand von bevorzugten Ausführungsbeispielen in Verbindung mit den zugehörigen Figuren näher erläutert. In diesen zeigen:

- Figur 1: ein erstes Ausführungsbeispiel einer Kupplungsvorrichtung mit einer Anpressplatte, die eine ringförmige, umgeformte Blechplatte aufweist, in einer Schnittansicht,
- Figur 2: eine Detailansicht der Kupplungsvorrichtung aus Figur 1, und
- Figur 3: ein zweites. nicht erfindungsgemäßes Beispiel einer Anpressplatte, die eine ringförmige, umgeformte Blechplatte aufweist, in einer perspektivischen Ansicht.

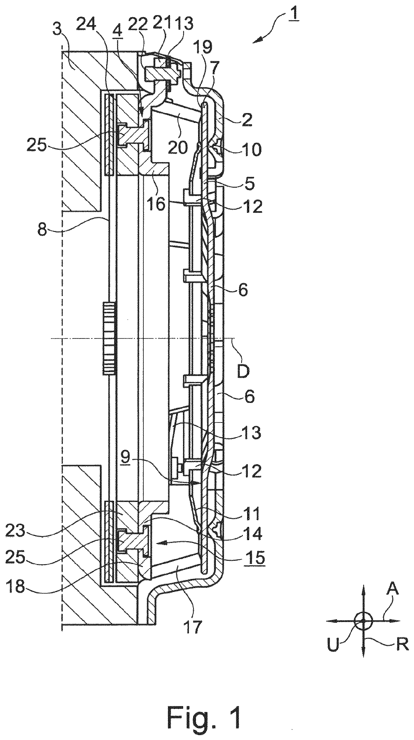

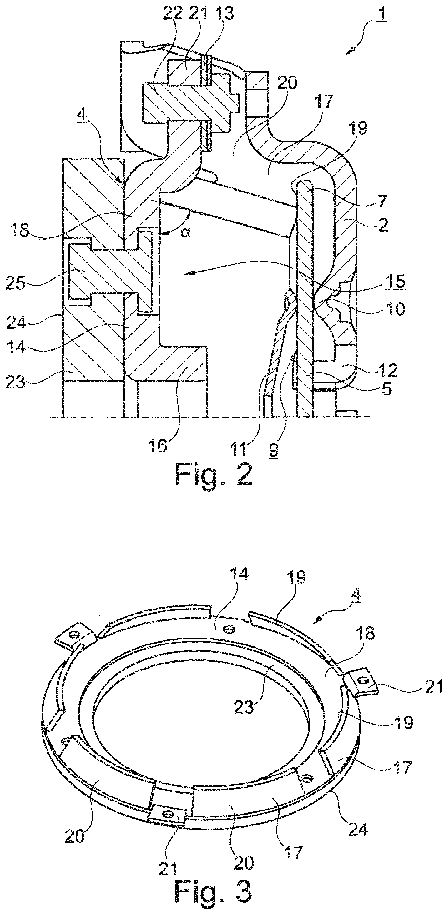

Die Figuren 1 und 2 betreffen ein bevorzugtes Ausführungsbeispiel einer Kupplungsvorrichtung 1 sowie einer Anpressplatte 4 für eine Kupplungsvorrichtung 1 für ein Kraftfahrzeug. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Kupplungsvorrichtung 1 und der Anpressplatte 4, die Teilkombinationen der im folgenden zu erläuternden Merkmale aufweisen.

Die in Figur 1 dargestellte Kupplungsvorrichtung 1 ist drehbar um eine Drehachse D gelagert und weist zumindest eine Anpressplatte 4, zumindest eine Gegendruckplatte 3 und zumindest eine in axialer Richtung A der Kupplungsvorrichtung 1 zwischen der Anpressplatte 4 und der Gegendruckplatte 3 angeordnete Kupplungsscheibe 8 auf. Die Gegendruckplatte 3 ist mit einem Gehäusebauteil der Kupplungsvorrichtung 1, insbesondere einem Kupplungsdeckel 2, fest verbunden, insbesondere verschraubt. Die Anpressplatte 4 ist im Kupplungsgehäuse, insbesondere innerhalb des Kupplungsdeckels 2, drehfest gelagert und in axialer Richtung A begrenzt verlagerbar. Insbesondere ist die Anpressplatte 4 mittels mehrerer in Umfangsrichtung U der Kupplungsvorrichtung 1 verteilt angeordneter Blattfedern 13 drehfest gelagert und in axialer Richtung A begrenzt verlagerbar. Insbesondere ist die Anpressplatte 4 mittels der Blattfedern 13 drehfest im Kupplungsgehäuse, genauer gesagt am Kupplungsdeckel 2, befestigt und von der Gegendruckplatte 3 weg, d.h. mit Bezug auf Figur 1 nach rechts, vorgespannt.

Darüber hinaus weist die Kupplungsvorrichtung 1 ein Hebelelement auf, das für einen normal-eingerückte Kupplungsvorrichtung 1, die in Figur 1 dargestellt ist, als Tellerfeder 5 und für eine normal-ausgerückte Kupplungsvorrichtung 1 als Hebelfeder ausgebildet sein kann. Die Tellerfeder 5 ist gehäuseseitig abgestützt und durch eine nicht dargestellte Aktoreinrichtung betätigbar. Die gehäuseseitige Abstützung kann beispielsweise durch eine am Kupplungsdeckel 2 vorgesehene Schwenklagerung 9, durch die die Tellerfeder 5 verkippbar aufgehängt ist, erfolgen. Im dargestellten Ausführungsbeispiel weist die Schwenklagerung 9 hierzu eine deckelseitige, umlaufende Sicke 10 oder mehrere deckelseitige, kreisbogensegmentförmig ausgebildete Sicken 10 auf. Ferner weist die Schwenklagerung mehrere in Umfangsrichtung U verteilt angeordnete Haken 12 auf, die sich ins Innere der Kupplungsvorrichtung 1 erstrecken und an denen eine Stützfeder 11 gelagert ist. Zwischen den deckelseitigen Sicken 10 und der Stützfeder 11 ist die Tellerfeder 5 in axialer Richtung A gelagert und erstreckt sich in radialer Richtung R der Kupplungsvorrichtung 1 nach außen.

Über Tellerfederzungen 6, die in radialer Richtung R auf der Innenseite der vorzugsweise im Wesentlichen ringförmig ausgebildeten Tellerfeder 5 angeordnet sind, ist die Tellerfeder 5 durch die Aktoreinrichtung betätigbar. In ihrem radialen Außenbereich weist die Tellerfeder 5 einen Kraftrand 7 auf. Über ihren Kraftrand 7 wirkt die Tellerfeder 5 auf die Anpressplatte 4, indem der Kraftrand 7 der Tellerfeder 5 an freien Kanten 19 einer Blechplatte 14 der Anpressplatte 4 verkippbar anliegt und im eingerückten Zustand der Kupplungsvorrichtung 1 Druck auf die Anpressplatte 4 ausübt.

Bei der normal eingerückten, in Figur 1 dargestellten Kupplungsvorrichtung 1 überwiegt die wirksame Kraft des als Tellerfeder 5 ausgebildeten Hebelelements die Gegenkraft der Blattfedern 13, während bei einer normal-ausgerückten Kupplungsvorrichtung 1 die Gegenkraft der Blattfedern 13 die wirksame Kraft des als Hebelfeder ausgebildeten Hebelelements überwiegt. Dementsprechend führt eine Betätigung der Tellerfeder 5 der normal-eingerückten, in Figur 1 dargestellten Kupplungsvorrichtung 1 zum Ausrücken der Kupplungsvorrichtung 1 durch Verkippen bzw. Umschnappen der Tellerfeder, d.h. zum Abhub der Anpressplatte 4 und zur Entfernung der Anpressplatte 4 von der Gegendruckplatte 3, während eine Betätigung der Hebelfeder bei einer normal-ausgerückten Kupplungsvorrichtung 1 zum Einrücken der Kupplungsvorrichtung 1 durch Verkippen der Hebelfeder führt.

Bei eingerückter Kupplungsvorrichtung 1 wird ein Drehmoment von der Eingangsseite der Kupplungsvorrichtung 1, beispielsweise von einem Zweimassenschwungrad, über das Kupplungsgehäuse und sowohl die Gegendruckplatte 3 als auch die Anpressplatte 4, die beide mit dem Kupplungsgehäuse, insbesondere mit dem Kupplungsdeckel 2, drehfest verbunden sind, reibschlüssig auf die Kupplungsscheibe 8 übertragen. Von der Kupplungsscheibe 8, die reibschlüssig zwischen der Gegendruckplatte 3 und der Anpressplatte 4 geklemmt ist, wird das Drehmoment zur Ausgangsseite der Kupplungsvorrichtung 1 übertragen, beispielsweise zu einer Eingangswelle eines Getriebes.

Da aufgrund des Reibschlusses sowohl die Reibbeläge der Kupplungsscheibe 8 als auch in geringerem Maße die Reibflächen der Gegendruckplatte 3 und der Anpressplatte 4 einem Verschleiß unterworfen sind, muss über die Lebensdauer der Kupplungsvorrichtung 1 die Anpressplatte 4 immer näher an die Gegendruckplatte 3 heranbewegt werden, um die Abnahme der Dicke der Reibbeläge und der Stärke der Reibflächen in axialer Richtung A zu kompensieren und den Reibschluss herstellen bzw. die Kupplungsvorrichtung 1 einrücken zu können. Hierzu kann in der Kupplungsvorrichtung 1 eine nicht dargestellte Verschleißnachstelleinrichtung ausgebildet sein.

Die in Figur 1 dargestellten Ausführungsbeispiele der Kupplungsvorrichtung 1, deren Details in Figur 2 dargestellt sind, weist die Anpressplatte 4 eine ringförmige, umgeformte Blechplatte 14 mit im Wesentlichen U-förmigen Querschnitt auf. Eine Öffnung 15 des U-förmigen Querschnitts weist in axialer Richtung A von der Kupplungsscheibe 8 weg. Somit ist die Blechplatte 14 ins Innere des Kupplungsdeckels 2 geöffnet.

Der U-förmige Querschnitt weist einen ersten Schenkel 16, der sich in radialer Richtung R von einem Innenrand der Blechplatte 14 ausgehend im Wesentlichen in axialer Richtung A erstreckt, auf. Ferner weist der U-förmige Querschnitt eines zweiten Schenkels 17, der sich in radialer Richtung R von einem Außenrand der Blechplatte 14 ausgehend im Wesentlichen in axialer Richtung A erstreckt, auf. Darüber hinaus weist der U-förmige Querschnitt eine die beiden Schenkel 16, 17 verbindende Basis 18 auf.

Im dargestellten Ausführungsbeispiel ist in axialer Richtung A zwischen der Blechplatte 14 und der Kupplungsscheibe 8 eine Zusatzplatte 23 vorgesehen, die fest mit der Blechplatte 14 verbunden ist, und die eine Reibfläche 24 zur Anlage an der Kupplungsscheibe 8 aufweist. Die Zusatzplatte 23 ist im dargestellten Ausführungsbeispiel als nicht umgeformte, weitere Blechplatte ausgebildet. Innen- und Außendurchmesser der Zusatzplatte 23 entsprechen im dargestellten Ausführungsbeispiel im Wesentlichen dem Innen- und Außendurchmesser der Blechplatte 14. Vorzugsweise handelt es sich bei der Zusatzplatte um ein 5, 6, 7, 8, 9 oder 10 mm starkes Grobblech. Ferner ist die Zusatzplatte 23 mit der Blechplatte 14 kraftschlüssig und/oder formschlüssig verbunden.

Im dargestellten Ausführungsbeispiel ist die Zusatzplatte 23 mit der Blechplatte 14 mittels mehrerer in Umfangsrichtung U verteilt angeordneter Verbindungsniete 25 verbunden. Hierzu sind im dargestellten Ausführungsbeispiel Setzköpfe der Verbindungsniete 25 auf Seiten der Blechplatte 14 und Schließköpfe der Verbindungsniete 25 auf Seiten der Zusatzplatte 23 ausgebildet. Setzköpfe und Schließköpfe sind dabei in die jeweiligen Platten 14, 23 versenkt. Anstelle der Vernietung ist es auch möglich, die Zusatzplatte 23 mit der Blechplatte 14 zu verschrauben. Auch andere Verbindungsarten, beispielsweise auch stoffschlüssige Verbindungsarten, sind möglich.

Obwohl dies nicht dargestellt ist, ist es auch möglich, dass die Anpressplatte 4 lediglich eine Blechplatte 14 und keine Zusatzplatte 23 aufweist, so dass die der Kupplungsscheibe 8 zugewandte Oberfläche der Blechplatte 14 die Reibfläche bildet, mit der sich die Kupplungsscheibe 8 im eingerückten Zustand der Kupplungsvorrichtung 1 in reibschlüssiger Anlage befindet.

Einer der beiden Schenkel 16, 17 der Blechplatte 14, vorzugsweise der erste, d.h. der in radialer Richtung R innen ausgebildete Schenkel 16, ist in axialer Richtung A kürzer als der andere der beiden Schenkel 16, 17 ausgebildet. Die Tellerfeder 5 liegt zum Ein- und/oder Ausrücken der Kupplungsvorrichtung 1 verkippbar auf der freien Kante 19 des anderen der beiden Schenkel 16, 17, d.h. des längeren der beiden Schenkel 16, 17, an. Im dargestellten Ausführungsbeispiel handelt es sich bei dem längeren der beiden Schenkel 16, 17 um den sich vom Außenrand der Blechplatte 14 ausgehend im Wesentlichen in axialer Richtung A erstreckenden Schenkel 17.

Einer der beiden Schenkel 16, 17, vorzugsweise der zweite, d.h. der in radialer Richtung R außen ausgebildete Schenkel 17, schließt mit der Basis 18 einen Winkel α kleiner als 90° ein. Vorzugsweise gilt für den Winkel α 60° < α < 90°, insbesondere vorzugsweise 70° < α < 80°.

Einer der beiden Schenkel 16, 17, vorzugsweise der erste, d.h. der in radialer Richtung R innen ausgebildete Schenkel 16, ist in Umfangsrichtung U als geschlossener Ring ausgebildet.

Alternativ oder zusätzlich weist der andere der beiden Schenkel 16, 17, vorzugsweise der zweite, d.h. der in radialer Richtung R außen ausgebildete Schenkel 17, mehrere in Umfangsrichtung U voneinander beabstandete Kreisbogensegmente 20 auf. Auf diesen Kreisbogensegmenten 20, genauer gesagt auf den freien Kanten 19 der Kreisbogensegmente 20, liegt im dargestellten Ausführungsbeispiel der Kraftrand 7 der Tellerfeder 5 verkippbar auf. Vorzugsweise sind daher die Kreisbogensegmente 20, genauer gesagt die freien Enden 19 der Kreisbogensegmente 20 gehärtet und/oder mit einer reibungsmindernden Oberflächenbeschichtung ausgestattet.

Zwischen zwei benachbarten Kreisbogensegmenten 20 ist eine sich in radialer Richtung R, vorzugsweise nach außen, erstreckende Lasche 21 ausgebildet, über die die Anpressplatte 4 mittels zumindest einer Blattfeder 13 drehfest und in axialer Richtung A begrenzt verlagerbar am Kupplungsdeckel 2 oder an der Gegendruckplatte 3 befestigt ist. Im dargestellten Ausführungsbeispiel weist die Anpressplatte 4 sechs voneinander beabstandete Kreisbogensegmente 20 auf, wobei zwischen Paaren von Kreisbogensegmenten 20 eine von insgesamt drei Laschen 21 vorgesehen ist. Mittels Blattfederniete 22 sind die Blattfedern 13 an den Laschen 21 in Umfangsrichtung U bzw. in tangentialer Richtung befestigt. Ferner sind im dargestellten Ausführungsbeispiel zwischen den Lücken der Kreisbogensegmente 20 die Löcher für die Verbindungsniete 25 zur Befestigung der Zusatzplatte 23 vorgesehen, um eine automatische und kollisionsfreie Vernietung der Zusatzplatte zu ermöglichen.

Obwohl dies in den dargestellten Ausführungsbeispielen nicht gezeigt ist, kann alternativ oder zusätzlich auch die Gegendruckplatte 3 der Kupplungsvorrichtung 1 mit einer zuvor beschriebenen ringförmigen, umgeformten Blechplatte 14 sowie gegebenenfalls einer Zusatzplatte 23, die die zuvor erläuterten Merkmale aufweist / aufweisen, ausgestattet sein.

Die in Figur 3 dargestellte, nicht erfindungsgemäße Anpressplatte 4 kann gleichermaßen in der in Figur 1 dargestellten Kupplungsvorrichtung 1 vorgesehen sein. Im Unterschied zur zuvor erläuterten, erfindungsgemäßen Anpressplatte 4 weist die nicht erfindungsgemäße Blechplatte 14 der in Figur 3 dargestellten Anpressplatte 4 einen im Wesentlichen L-förmigen Querschnitt auf. Eine Öffnung 15 des L-förmigen Querschnitts weist in axialer Richtung A von der Kupplungsscheibe 8 weg. Der L-förmige Querschnitt weist eine Basis 18, mit der die Zusatzplatte 23 vorzugsweise vernietet ist, sowie einen Schenkel, der sich in radialer Richtung R vom Außenrand der Blechplatte 14 ausgehend im Wesentlichen in axialer Richtung A erstreckt, auf.

Für diesen Schenkel gelten die gleichen bevorzugten Weiterbildungen, die bei der Beschreibung des ersten, in Figur 1 dargestellten Ausführungsbeispiels bezüglich des zweiten Schenkels 17 erläutert worden sind.

Darüber hinaus unterscheidet sich die Anpressplatte 4, die in Figur 3 dargestellt ist, von der Anpressplatte 4 der Kupplungsvorrichtung 1 aus Figur 1 dadurch, dass der Außendurchmesser der Zusatzplatte 23 im Wesentlichen dem Außendurchmesser der Blechplatte 14 entspricht, während der Innendurchmesser der Zusatzplatte 23 kleiner als der Innendurchmesser der Blechplatte 14 ist.

## Patentansprüche

1. Kupplungsvorrichtung (1) für einen Antriebsstrang eines Kraftfahrzeugs mit zumindest einer mit einer Abtriebsseite eines Verbrennungsmotors verbindbaren Gegendruckplatte (3) und mit zumindest einer bezüglich der Gegendruckplatte (3) in axialer Richtung (A) der Kupplungsvorrichtung (1) begrenzt verlagerbaren Anpressplatte (4) zur reibschlüssigen Klemmung einer Kupplungsscheibe (8) zwischen der Gegendruckplatte (3) und der Anpressplatte (4), wobei zumindest eine der beiden Platten (3, 4) zumindest eine ringförmige, umgeformte Blechplatte (14) aufweist, wobei die umgeformte Blechplatte (14) einen im Wesentlichen U-förmigen Querschnitt aufweist, der einen ersten Schenkel (16), der sich in radialer Richtung (R) der Kupplungsvorrichtung (1) von einem Innenrand der Blechplatte (14) ausgehend im Wesentlichen in axialer Richtung (A) erstreckt, einen zweiten Schenkel (17), der sich in radialer Richtung (R) von einem Außenrand der Blechplatte (14) ausgehend im Wesentlichen in axialer Richtung (A) erstreckt, und eine die beiden Schenkel (16, 17) verbindende Basis (18) aufweist, **dadurch gekennzeichnet, dass** in axialer Richtung (A) zwischen der Blechplatte (14) und der Kupplungsscheibe (8) eine Zusatzplatte (23) vorgesehen ist, die fest mit der Blechplatte (14) verbunden ist, und die eine Reibfläche (24) zur Anlage an der Kupplungsscheibe (8) aufweist.

2. Kupplungsvorrichtung (1) nach Anspruch 1, wobei eine Öffnung (15) des U-förmigen Querschnitts in axialer Richtung (A) von der Kupplungsscheibe (8) weg weist.

3. Kupplungsvorrichtung (1) nach Anspruch 1 oder 2, wobei einer der beiden Schenkel (16, 17), vorzugsweise der erste Schenkel (16), in axialer Richtung (A) kürzer als der andere der beiden Schenkel (16, 17) ausgebildet ist, und wobei vorzugsweise bei der als Anpressplatte (4) ausgebildeten Platte (3, 4) ein Hebelelement, vorzugsweise eine Tellerfeder (5), zum Ein- und/oder Ausrücken verkippbar auf einer freien Kante (19) des anderen der beiden Schenkel (16, 17) anliegt.

4. Kupplungsvorrichtung (1) nach einem der Ansprüche 1 bis 3, wobei einer der beiden Schenkel (16, 17), vorzugsweise der zweite Schenkel (17), mit der Basis (18) einen Winkel (α) kleiner als 90° einschließt, wobei der Winkel (α) vorzugsweise 60° < α < 90°, insbesondere vorzugsweise 70° < α < 80°, ist.

5. Kupplungsvorrichtung (1) nach einem der Ansprüche 1 bis 4, wobei einer der beiden Schenkel (16, 17), vorzugsweise der erste Schenkel (16), in Umfangsrichtung (U) der Kupplungsvorrichtung (1) als geschlossener Ring ausgebildet ist, und/oder wobei der andere der beiden Schenkel (16, 17), vorzugsweise der zweite Schenkel (17), mehrere in Umfangsrichtung (U) voneinander beabstandete Kreisbogensegmente (20) aufweist.

6. Kupplungsvorrichtung (1) nach Anspruch 5, wobei zwischen zwei benachbarten Kreisbogensegmenten (20) eine sich in radialer Richtung (R), vorzugsweise nach außen, erstreckende Lasche (21) ausgebildet ist, über die die Anpressplatte (4) mittels zumindest einer Blattfeder (13) drehfest und in axialer Richtung (A) begrenzt verlagerbar an einem Kupplungsdeckel (2) oder an der Gegendruckplatte (3) befestigt ist.

7. Kupplungsvorrichtung (1) nach einem der Ansprüche 1 bis 6, wobei die Zusatzplatte (23) als, vorzugsweise nicht umgeformte, weitere Blechplatte ausgebildet ist.

8. Kupplungsvorrichtung (1) nach einem der Ansprüche 1 bis 7, wobei die Zusatzplatte (23) mit der Blechplatte (14) kraftschlüssig und/oder formschlüssig verbunden, vorzugsweise vernietet, ist.

## Claims

1. Coupling device (1) for a drive train of a motor vehicle, having at least one counterpressure plate (3) which can be connected to an output side of an internal combustion engine, and having at least one pressure plate (4) which can be displaced to a limited extent in relation to the counterpressure plate (3) in an axial direction (A) of the coupling device (1), for frictionally clamping a coupling disc (8) between the counterpressure plate (3) and the pressure plate (4), wherein at least one of the two plates (3, 4) has at least one annular, formed sheet-metal plate (14), wherein the formed sheet-metal plate (14) has a substantially U-shaped cross-section, which comprises a first leg (16), which extends in the radial direction (R) of the coupling device (1) starting from an inner edge of the sheet-metal plate (14) substantially in an axial direction (A), a second leg (17), which extends in a radial direction (R) starting from an outer edge of the sheet-metal plate (14) substantially in an axial direction (A) and a base (18) connecting the two legs (16, 17), **characterised in that** an additional plate (23) is provided in an axial direction (A) between the sheet-metal plate (14) and the coupling disc (8), which is firmly connected to the sheet-metal plate (14) and which has a friction surface (24) for bearing against the coupling disc (8).

2. Coupling device (1) according to claim 1, wherein an opening (15) of the U-shaped cross-section faces away from the coupling disc (8) in an axial direction (A).

3. Coupling device (1) according to claim 1 or 2, wherein one of the two legs (16, 17), preferably the first leg (16), is designed to be shorter in an axial direction (A) than the other of the two legs (16, 17), and wherein preferably in the case of the plate (3, 4) configured as a pressure plate (4) a lever element, preferably a disc spring (5), rests tiltably on a free edge (19) of the other of the two legs (16, 17) for engagement and/or disengagement.

4. Coupling device (1) according to one of claims 1 to 3, wherein one of the two legs (16, 17), preferably the second leg (17), forms an angle (α) smaller than 90° with the base (18), wherein the angle (α) is preferably 60° < α < 90°, in particular preferably 70° < α < 80°.

5. Coupling device (1) according to one of claims 1 to 4, wherein one of the two legs (16, 17), preferably the first leg (16), is formed as a closed ring in a circumferential direction (U) of the coupling device (1), and/or wherein the other of the two legs (16, 17), preferably the second leg (17), comprises a plurality of circular arc segments (20) spaced apart from one another in a circumferential direction (U).

6. Coupling device (1) according to claim 5, wherein a lug (21) extending in a radial direction (R), preferably outwards, is formed between two adjacent circular arc segments (20), wherein the pressure plate (4) is attached via said lug to a coupling cover (2) or to the counterpressure plate (3) by means of at least one leaf spring (13) in a rotationally fixed manner and in a manner displaceable to a limited extent in an axial direction (A).

7. Coupling device (1) according to one of claims 1 to 6, wherein the additional plate (23) is configured as a preferably non-formed additional sheet-metal plate.

8. Coupling device (1) according to one of claims 1 to 7, wherein the additional plate (23) is connected in a force-locking and/or form-locking manner, preferably riveted, to the sheet-metal plate (14).

## Revendications

1. Dispositif d'embrayage (1) pour un groupe motopropulseur d'un véhicule automobile, comprenant au moins une plaque de contre-pression (3) pouvant être reliée à un côté de sortie d'un moteur à combustion interne et comprenant au moins un plaque de pression (4) pouvant être déplacée de manière limitée par rapport à la plaque de contre-pression (3) dans la direction axiale (A) du dispositif d'embrayage (1) pour le serrage par friction d'un disque d'embrayage (8) entre la plaque de contre-pression (3) et la plaque de pression (4), au moins l'une des deux plaques (3, 4) présentant au moins une plaque de tôle déformée annulaire (14), la plaque de tôle déformée (14) ayant une section transversale sensiblement en forme de U, qui présente une première branche (16) qui s'étend dans la direction radiale (R) du dispositif d'embrayage (1) en partant d'un bord intérieur de la plaque de tôle (14) sensiblement dans la direction axiale (A), une seconde branche (17) qui s'étend dans la direction radiale (R) en partant d'un bord extérieur de la plaque de tôle (14) sensiblement dans la direction axiale (A) et une base (18) reliant les deux branches (16, 17), **caractérisé en ce qu'**une plaque supplémentaire (23) est prévue dans la direction axiale (A) entre la plaque de tôle (14) et le disque d'embrayage (8), qui est fixement reliée à la plaque de tôle (14) et présente une surface de friction (24) pour s'appuyer contre le disque d'embrayage (8).

2. Dispositif d'embrayage (1) selon la revendication 1, dans lequel une ouverture (15) de la section transversale en forme de U est orientée à l'opposé du disque d'embrayage (8) dans la direction axiale (A).

3. Dispositif d'embrayage (1) selon la revendication 1 ou 2, dans lequel l'une des deux branches (16, 17), de préférence la première branche (16), est plus courte dans la direction axiale (A) que l'autre des deux branches (16, 17) et dans lequel, de préférence dans le cas de la plaque (3, 4) formée comme une plaque de pression (4), un élément de levier, de préférence un ressort à disque (5), repose de manière inclinable sur un bord libre (19) de l'autre des deux branches (16, 17) pour l'engagement et/ou le désengagement.

4. Dispositif d'embrayage (1) selon l'une quelconque des revendications 1 à 3, dans lequel l'une des deux branches (16, 17), de préférence la seconde branche (17), forme un angle (α) inférieur à 90° avec la base (18), l'angle (α) étant de préférence de 60° < α < 90°, notamment de préférence de 70° < α < 80°.

5. Dispositif d'embrayage (1) selon l'une quelconque des revendications 1 à 4, dans lequel l'une des deux branches (16, 17), de préférence la première branche (16), est réalisée sous forme d'anneau fermé dans la direction périphérique (U) du dispositif d'embrayage (1) et/ou dans lequel l'autre des deux branches (16, 17), de préférence la seconde branche (17), présente une pluralité de segments d'arc de cercle (20) espacés les uns des autres dans la direction périphérique (U).

6. Dispositif d'embrayage (1) selon la revendication 5, dans lequel, entre deux segments d'arc de cercle (20) adjacents, est formée une languette (21) s'étendant dans la direction radiale (R), de préférence vers l'extérieur, par laquelle la plaque de pression (4) est fixée à un couvercle d'embrayage (2) ou à la plaque de contre-pression (3) au moyen d'au moins un ressort à lames (13) solidaire en rotation et de manière à pouvoir être déplacée de manière limitée dans la direction axiale (A).

7. Dispositif d'embrayage (1) selon l'une quelconque des revendications 1 à 6, dans lequel la plaque supplémentaire (23) est réalisée sous la forme d'une autre plaque de tôle, de préférence non déformée.

8. Dispositif d'embrayage (1) selon l'une quelconque des revendications 1 à 7, dans lequel la plaque supplémentaire (23) est reliée, de préférence rivetée, à la plaque de tôle (14) à force et/ou par complémentarité de forme.
